# NEUE EUROPÄISCHE PATENTSCHRIFT

(11) **EP 2 607 707 B2**
(45) Veröffentlichungstag und Bekanntmachung des Hinweises auf die Entscheidung über den Einspruch: **23.11.2022**
(45) Hinweis auf die Patenterteilung: 19.02.2020
(21) Anmeldenummer: 11195636.3
(22) Anmeldetag: 23.12.2011
(51) Int. Cl.: F04D 25/06, H02K 11/33, F04D 13/06, F04D 29/58, H02K 5/22, F04D 29/02, H02K 5/128, H02K 7/08

(54) **Elektromotor**
Electric motor
Moteur électrique

(43) Veröffentlichungstag der Anmeldung: 26.06.2013
(73) Patentinhaber: Grundfos Holding A/S, 8850 Bjerringbro (DK)
(72) Erfinder: Andersen, Lars Kannegaard, 8920 Randers NV (DK); Jensen, Jørgen Elkjær, 8850 Bjerringbro (DK)
(74) Vertreter: Patentanwälte Vollmann Hemmer Lindfeld Partnerschaft mbB

(56) Entgegenhaltungen:
- EP-A1- 1 063 751
- EP-A1- 1 582 751
- EP-A1- 1 742 334
- EP-A1- 2 166 230
- EP-A2- 2 048 767
- WO-A1-00/51863
- WO-A1-2007/108049
- WO-A1-2008/135103
- WO-A1-2008/135103
- DE-A1- 2 908 936
- DE-A1- 19 511 170
- DE-A1- 19 956 429
- DE-A1-102005 032 968
- DE-A1-102005 032 968
- DE-A1-102006 028 317
- DE-A1-102008 051 650
- DE-C1- 19 511 114
- DE-U1- 29 807 831
- FR-A1- 2 896 634
- US-A1- 2003 127 921
- US-A1- 2003 230 942
- US-A1- 2009 289 513
- US-B2- 7 923 875

## Beschreibung

Die Erfindung betrifft einen Elektromotor mit den im Oberbegriff des Anspruchs 1 angegebenen Merkmalen.

Elektromotoren der genannten Art werden zu vielfältigsten Zwecken eingesetzt und sind in mannigfaltigen Bauausführungen auf dem Markt. Insbesondere werden solche Elektromotoren auch als Antriebsmotoren für Kreiselpumpen eingesetzt und sind dann häufig als Spaltrohrmotor ausgebildet, wobei der Rotor in einem flüssigkeitsgefüllten Spaltrohr läuft und das Spaltrohr beispielsweise mit der Förderflüssigkeit der Pumpe gefüllt ist und von einem Teilstrom des Förderstroms durchströmt ist.

Bei Elektromotoren ist es üblich, dass sie einen so genannten Klemmenkasten aufweisen, d. h. ein außen am Motorgehäuse angeordnetes Anschlussgehäuse, welches elektrische Anschlüsse sowie elektronische Bauteile aufnimmt. Bei Elektromotoren zählt es zum Stand der Technik ein solches Anschlussgehäuse bezogen auf die Motorachse umfänglich anzuordnen oder auch axial, d. h. an einer Stirnseite des Motors. Es sind auch Anschlussgehäuse bekannt, die sich sowohl umfänglich als auch stirnseitig erstrecken, z. B. bei den von Grundfos unter dem Namen Magna Typ 32-60 vertriebenen Heizungsumwälzpumpen. Dabei dient das Anschlussgehäuse typischerweise zum Verbinden der Motorwicklungen mit dem elektrischen Versorgungsnetz, also zum Anschließen des Motors an das Versorgungsnetz sowie zur Aufnahme elektronischer Bauteile. Dies können in einfachster Weise Entstörkondensatoren oder dergleichen sein. Bei modernen Motoren umfasst dieses Anschlussgehäuse meist noch die Motorelektronik. Dies können einerseits Leistungselektronik und andererseits Mikroprozessoren und die im Zusammenhang mit der digitalen Signalverarbeitung üblichen Elektronikbauteile sein. Insbesondere bei modernen frequenzumrichtergesteuerten Motoren, wie sie bei Kreiselpumpen aber auch bei anderen Antriebsanwendungen heutzutage regelmäßig eingesetzt werden, zählt es zum Stand der Technik, die Frequenzumrichterelektronik ganz oder teilweise im Anschlussgehäuse anzuordnen.

Insbesondere wenn Leistungselektronik im Anschlussgehäuse angeordnet ist, ist es erforderlich, die im Gehäuse entstehende Abwärme effektiv und sicher abzuführen. Um dies zu gewährleisten werden die Anschlussgehäuse bekannter Bauart meist aus Metall ausgebildet und mit Kühlrippen versehen oder aber die Leistungselektronik wird über einen außen am Gehäuse angeordneten Kühlkörper oder andere geeignete Kühlmaßnahmen gekühlt. Diese Kühlkörper erfordern viel Raum und vergrößern die Abmessungen des Elektromotors. Auch ist es häufig problematisch, dass im Anschlussgehäuse auch wärmeempfindliche Bauteile angeordnet werden müssen. Die Ausbildung des Gehäuses oder Gehäuseteils aus Metall ist aufwändig und teuer. Für unterschiedliche Leistungsgrößen und Anschlussgehäusevarianten sind stets unterschiedliche Gehäuse erforderlich, was hinsichtlich Fertigung, Werkzeugen und Lagerhaltung aufwendig ist.

Aus WO 2007/108049 A1 ist ein Elektromotor bekannt, welcher ein radial zum Motor angeordnetes Anschlussgehäuse aufweist, welches sich über die gesamte axiale Länge des Motors erstreckt. Ein axialer Teil dieses Anschlussgehäuses ist ausschließlich zur Kontaktierung der Motorwicklungen vorgesehen. Darüber hinaus ist ein weiteres axiales Anschlussgehäuse an der Seite des Motorgehäuses vorgesehen, an welcher die Antriebswelle herausgeführt ist, welches jedoch unabhängig von dem radialen Anschlussgehäuse ist.

Aus EP 1063751 A1 ist ein Pumpenaggregat mit elektrischem Antriebsmotor bekannt, welches ein am Außenumfang des Motors angeordnetes radiales Anschlussgehäuse und ein stirnseitig angeordnetes axiales Anschlussgehäuse aufweist. Das radiale Anschlussgehäuse bildet den Klemmenkasten, wohingegen das axiale Gehäuse eine Schaltuhr umfasst, die beiden Gehäuseteile stehen in keinerlei funktionaler Verbindung zueinander, sie sind räumlich und funktional unabhängig voneinander und nur durch das Motorgehäuse verbunden.

Aus DE 2908936 A1 ist ein Elektromotor bekannt, bei welchem ein Inverter in das Motorgehäuse integriert ist, wozu das Motorgehäuse axial verlängert ausgebildet ist. Zum Anschluss des Elektromotors ist ein Klemmenkasten radial am Motorgehäuse angeordnet.

Aus WO 2008/135103 A1 ist ein Kreiselpumpenaggregat bekannt, dessen Elektromotor einen sich über die gesamte axiale Länge des Motors erstreckenden Anschlusskasten aufweist, welcher zur Aufnahme eines Kondensators sowie eines Anschlusssteckers ausgebildet ist und somit über die reine Anschlussfunktion nicht hinausgeht.

Aus US 2003/0230942 A1 zählt es zum Stand der Technik über einen stirnseitigen Flansch des Motors ein umfangsseitig des Motors also radial angeordnetes Anschlussgehäuse anzubringen, welches zum Motor hin beabstandet ist, um in diesem Bereich das Anschlussgehäuse und damit die darin befindliche Leistungselektronik zu kühlen.

Ein ebenfalls radial angeordnetes Anschlussgehäuse ist aus US 2003/0127921 A1 bekannt. Dort überragt das Anschlussgehäuse das Motorgehäuse auch in axialer Richtung.

Aus DE 19511114 C1 zählt es zum Stand der Technik, ein axiales Anschlussgehäuse in Fortsetzung des Motorgehäuses oder Teil des Motorgehäuses vorzusehen, um dort die Frequenzumrichterelektronik anzuordnen und diese mit dem Kühlluftstrom des Motors zu kühlen. Für den Anschluss des Elektromotors an das Versorgungsnetz ist am Motorgehäuse radial ein Klemmenkasten vorgesehen, also ein radiales Anschlussgehäuse, welches jedoch mit dem axialen Anschlussgehäuse nur über das Motorgehäuse und ein leitungsführendes Rohr verbunden ist, im Übrigen aber weder eine räumliche noch funktionale Verbindung mit diesem aufweist.

Aus EP 1742334 A1 ist ein Elektromotor bekannt, der ein radiales Anschlussgehäuse aufweist, an dem ein axiales Anschlussgehäuse angeordnet ist, welches zum Motor hin gerichtete Kühlrippen aufweist und mit Abstand zum Motor angeordnet ist, jedoch über den Kühlluftstrom des Motors mit Kühlluft beaufschlagt wird. Die Anschlussgehäuse sind zwar miteinander verbunden, stehen jedoch im Übrigen in keinem funktionalen Zusammenhang miteinander. Die Elektronik ist in dem axialen Anschlussgehäuse angeordnet, wohingegen das radiale Anschlussgehäuse lediglich einen Verbindungskasten bildet um das axiale Anschlussgehäuse mit dem Klemmenkasten zu verbinden.

Aus EP 1582751 A1 zählt es zum Stand der Technik, ein Anschlussgehäuse einstückig auszubilden und dieses sowohl radial als auch axial an das Motorgehäuse anzuschließen. Das Anschlussgehäuse nimmt die Elektronik des Frequenzumrichters auf.

Aus DE 29807831 U1 zählt es zum Stand der Technik, axial an das Motorgehäuse ein Umrichtergehäuse anzuschließen, an dem wiederum radial ein Klemmenkasten angeordnet ist.

Aus EP 2048767 A2 zählt ein Elektromotor für die Hilfskraftunterstützung einer Lenkung zum Stand der Technik. Das Anschlussgehäuse ist dort zweiteilig ausgebildet und weist einen radialen Teil auf, welcher die Elektronik des Steuergerätes aufnimmt und einen axialen Teil, in welchem die Kontaktierungseinrichtung vorgesehen ist.

Vor diesem Hintergrund liegt der Erfindung die Aufgabe zugrunde einen gattungsgemäßen Elektromotor hinsichtlich des Anschlussgehäuses zu verbessern.

Diese Aufgabe wird gemäß der Erfindung durch die im kennzeichnenden Teil des Anspruchs 1 angegebenen Merkmale gelöst. Vorteilhafte Ausgestaltungen der Erfindung sind in den Unteransprüchen, der nachfolgenden Beschreibung und der Zeichnung angegeben.

Der erfindungsgemäße Elektromotor, der insbesondere als Spaltrohrmotor zum Antrieb einer Kreiselpumpe ausgebildet und vorgesehen ist, weist ein außen am Motorgehäuse angeordnetes Anschlussgehäuse auf, welches elektrische Anschlüsse sowie elektronische Bauteile aufnimmt und welches sich bezogen auf die Motorachse umfänglich und axial des Motorgehäuses erstreckt. Gemäß der Erfindung weist das Anschlussgehäuse zwei miteinander verbundene Einzelgehäuse auf, deren Innenräume verbunden sind.

Grundgedanke dabei ist es, anstatt wie bisher ein gemeinsames Anschlussgehäuse für Anschlüsse und elektronische Bauteile vorzusehen, zwei miteinander verbundene Einzelgehäuse vorzusehen und deren Innenräume miteinander zu verbinden.

Erstaunlicherweise hat sich gezeigt, dass die Anordnung von zwei miteinander verbundenen Einzelgehäusen gegenüber dem bekannten einzigen Einzelgehäuse zahlreiche Vorteile mit sich bringt.

So können die Einzelgehäuse aus unterschiedlichen Werkstoffen und damit dem jeweiligen Einsatzzweck besser angepasst werden. Durch die Anordnung von zwei Einzelgehäusen kann eine bessere thermische Trennung erfolgen. Dadurch dass die Einzelgehäuse miteinander verbunden sind, können diese wie ein Gehäuse gehandhabt werden, es sind also nicht zwei Gehäuse gesondert zu befestigen, sondern es kann die Befestigung gegebenenfalls nur über ein Einzelgehäuse oder an beiden Einzelgehäusen erfolgen. Dadurch dass erfindungsgemäß die Innenräume der Einzelgehäuse verbunden sind, kann nicht nur die elektrische Verbindung zwischen den Gehäusen praktisch beliebiger Art und konstruktiv einfach vorgesehen werden. Es kann, wie weiter unten noch im einzelnen ausgeführt, eine besonders vorteilhafte Raumnutzung der Einzelgehäuse erfolgen, ohne dass beispielsweise elektronische Komponenten oder dergleichen zwingend an die Größe eines der beiden Einzelgehäuse angepasst sein müssen.

Dabei ist gemäß der Erfindung ein Einzelgehäuse als Axialgehäuse ausgebildet und das andere Einzelgehäuse als Radialgehäuse ausgebildet. Axialgehäuse im Sinne der Erfindung bedeutet, dass dieses in axialer Richtung, also in Richtung der Drehachse des Motors an das Motorgehäuse anschließt. Radialgehäuse im Sinne der Erfindung bedeutet, dass das Motorgehäuse sich radial an das Motorgehäuse anschließt, also im Wesentlichen radial zur Drehachse des Motors angeordnet ist. Durch die radiale und axiale Anordnung der Einzelgehäuse kann der umfangseitig des Motorgehäuses vorhandene Platz einerseits und der stirnseitig des Motorgehäuses regelmäßig an einer Seite vorhandene Platz andererseits genutzt werden, um auf diese Weise einen kompakt bauenden Elektromotor zu realisieren.

Dabei ist es besonders vorteilhaft, wenn nur eines der Einzelgehäuse Leitungsdurchführungen in die Außenumgebungen aufweist. Typischerweise ist dies mindestens die Leitungsdurchführung für die elektrische Versorgungsleitung. Es können jedoch auch weitere Leitungsdurchführungen, beispielsweise Steuerleitungen, Leitungen zu Sensoren oder dergleichen vorgesehen sein. Wenn alle diese Leitungsdurchführungen in nur einem Einzelgehäuse vorgesehen sind, kann das andere Einzelgehäuse gegebenenfalls als geschlossenes Gehäuse ausgebildet sein, benötigt also nicht zwingend einen wiederöffnenbaren Deckel. Auch hat diese Anordnung den Vorteil, dass nur ein Einzelgehäuse diese vergleichsweise aufwändigen Leitungsabdichtungen benötigt, wohingegen das andere Einzelgehäuse quasi als geschlossenes Gehäuse ausgebildet sein kann. Es muss also nur ein Einzelgehäuse für die Zugänglichkeit von außen vorgesehen sein, beispielsweise um die Versorgungsleitung innerhalb des Gehäuses anzuklemmen.

Besonders vorteilhaft ist es dabei, wenn die eine oder mehrere Leitungsdurchführungen in einer radialen Umfangswand des Axialgehäuses angeordnet sind. Eine solche Anordnung ist insbesondere bei Verwendung des Elektromotors zum Antrieb einer Kreiselpumpe zweckmäßig, da dann die elektrischen Anschlussleitungen an einer weit von der fluidführenden Pumpe abgewandten Stelle herausgeführt sind und zudem die freie Stirnseite des Axialgehäuses durch Anzeige- und Bedienelemente nutzbar ist. Da insbesondere bei Umwälzpumpen die Anordnung stets so ist, dass die Motorachse liegt, d. h. horizontal angeordnet ist, ist die Leitungsdurchführung in einer radialen Umfangswand des Axialgehäuses auch von der Einbausituation her vorteilhaft, da die Leitungen seitlich am Ende des Motors aus dem Axialgehäuse herausgeführt werden, also dort wo üblicherweise keine hohe thermische und/oder mechanische Belastung vorhanden ist.

Die Einzelgehäuse sind gemäß der Erfindung mehrteilig aufgebaut, wobei sich die Werkstoffe von mindestens zwei Bauteilen der Einzelgehäuse um mindestens eine Zehnerpotenz in der Wärmeleitfähigkeit unterscheiden. Durch diese Anordnung kann einerseits eine gezielte Wärmeabfuhr von Leistungselektronik, die in einem Einzelgehäuse angeordnet ist, erzielt werden, andererseits können in weniger wärmebelasteten Regionen Materialien Verwendung finden, die hinsichtlich der Wärmeleitfähigkeit nicht besonders prädestiniert sind, sondern eher im Hinblick auf Herstellungskosten, Gewicht und Fertigung optimiert sind. Dabei ist typischerweise eines der Bauteile aus gut wärmeleitendem Metall, z. B. einer Leichtmetalllegierung ausgebildet, wohingegen das oder die anderen Einzelgehäusebauteile kostengünstig aus Kunststoff als Kunststoffspritzgussteile ausgebildet sein können. Eine solche Ausbildung dient auch dem modularen Aufbau dahingehend, dass ein vergleichsweise aufwendig zu fertigendes metallisches Einzelgehäuse für eine Vielzahl unterschiedlicher Anschlussgehäuse eingesetzt wird, wobei die anderen, aus Kunststoff bestehenden Bauteile variiert werden können. Dadurch können kostengünstig mit nur einem Einzelgehäusebauteil eine Vielzahl unterschiedlicher Anschlusskästen, zum Beispiel für Elektromotoren unterschiedlicher Leistung oder Steuerungen unterschiedlicher elektronischer Ausrüstung gefertigt werden.

Vorteilhaft sind die Einzelgehäuse jeweils aus einem Grundkörper und einem Deckel aufgebaut, wobei der Deckel auf der vom Motorgehäuse gegenüberliegend abgewandten Seite des Grundkörpers angeordnet, also außenliegend und gut zugänglich ist.

Grundsätzlich ist es auch denkbar, dass zumindest eines der Einzelgehäuse als einstückiges geschlossenes Gehäuse ausgebildet ist, beispielsweise durch Verschweißen des Deckels. Dies ändert jedoch nichts daran, dass der Aufbau zunächst einmal grundsätzlich zweiteilig ist.

Gemäß der Erfindung ist eine Anzeige- und/oder Bedieneinheit vorgesehen, die im Deckel eines Einzelgehäuses, und zwar vorzugsweise im Deckel des Axialgehäuses angeordnet ist. Diese freie Stirnseite des Elektromotors ist besonders günstig zur Anbringung einer Anzeige- und/oder Bedieneinheit, da die Zugänglichkeit und Sichtbarkeit in diesem Bereich typischerweise am besten ist. Insbesondere bei Verwendung des Elektromotors als Kreiselpumpenantrieb ist diese Seite von der Verrohrung der Pumpe am weitesten entfernt und somit meist gut zugänglich.

Bevorzugt ist das Anschlussgehäuse des erfindungsgemäßen Elektromotors zur Aufnahme eines elektronischen Drehzahlstellers für den Motor vorgesehen und ausgebildet. Dann ist es besonders vorteilhaft, wenn ein Einzelgehäuse den Leistungsteil des Drehzahlstellers und das andere Einzelgehäuse die Motorsteuerung aufnimmt, da dann die Motorsteuerung in einem hinsichtlich der Wärmeentwicklung weniger exponierten Raum als die Leistungselektronik angeordnet ist. Es kann dann eine gezielte Kühlung des einen Einzelgehäuses, welches den Leistungsteil des Drehzahlstellers aufnimmt, vorgesehen werden, wohingegen das andere Einzelgehäuse typischerweise ohne gesonderte konstruktive Maßnahmen zur Kühlung ausgebildet sein kann.

Eine konstruktiv besonders vorteilhafte Ausführungsvariante ergibt sich, wenn sich das Radialgehäuse bis über das Axialgehäuse erstreckt und die Einzelgehäuse in diesem Bereich miteinander verbunden sind. Dabei ist es zweckmäßig, die Einzelgehäuse in diesem Bereich nicht nur miteinander zu verbinden, sondern in den Bereichen, in denen die Einzelgehäuse aneinander anschließen, in den Wänden beider Gehäuse zueinander fluchtende Ausnehmungen vorzusehen sowie diese umgebende Dichtmittel und Befestigungsmittel, welche die Einzelgehäuse aneinander festlegen. Die Ausnehmungen in den Gehäusen sind vorteilhaft in den Wandungen vorgesehen, in welchen das Radialgehäuse das Axialgehäuse überragt, also in einer radialen Wand des Radialgehäuses sowie in einer radialen Wand des Axialgehäuses. Durch diese Anordnung ist es möglich, hoch bauende Teile auf einer im Radialgehäuse angeordneten Platine im Radialgehäuse platinenseitig festzulegen und bis ins Axialgehäuse ragen zu lassen, ohne eine gesonderte Platine für diese Bauteile im Axialgehäuse vorsehen zu müssen.

Zur Verbindung der Einzelgehäuse wird vorteilhaft eine Formschlussverbindung gewählt, beispielsweise eine oder mehrere Klick- und/oder Rastverbindungen, die in einem der Bauteile vorgesehen sind und die in dem anderen Bauteil verrasten, beispielsweise Federzungen oder dergleichen.

Bevorzugt ist das Radialgehäuse am Motorgehäuse befestigt und zwar vorzugsweise schraubbefestigt. Um auch dem Axialgehäuse eine ausreichende Befestigungsstabilität zu verleihen, ist gemäß einer Weiterbildung der Erfindung vorgesehen, Führungsmittel zwischen dem Motorgehäuse und dem Axialgehäuse vorzusehen, welche das Axialgehäuse formschlüssig am Motorgehäuse halten. Hierdurch wird die Stabilität der Befestigung der Einzelgehäuse deutlich erhöht, ohne gesondert handzuhabende Befestigungsmittel vorsehen zu müssen. Bei geeigneter Auslegung und Ausrichtung der Führungsmittel kann die formschlüssige Befestigung des Axialgehäuses am Motorgehäuse beim Aufschieben des Anschlussgehäuses erfolgen, sodass beide Einzelgehäuse nach Befestigen des Radialgehäuses auf dem Motorgehäuse fest mit diesem verbunden sind.

Das Radialgehäuse, welches bevorzugt die Leistungselektronik des elektronischen Drehzahlstellers aufnimmt, weist gemäß der Erfindung einen metallischen und mit Kühlrippen versehenen Grundkörper auf, auf dem eine Leistungselektronik aufweisende Platine angeordnet ist, von der Leistungsbauteile wärmeleitend mit dem Grundkörper verbunden sind, wobei die Leistungsbauteile in den bezogen auf die Längsachse des Motors seitlichen Bereichen am Boden des Grundkörpers angeordnet sind. Über diesen mit Kühlmitteln versehenen Grundkörper kann die Wärme der Leistungselektronik zuverlässig abgeführt werden.

Hinsichtlich der Kühlwirkung ist es besonders vorteilhaft, wenn die Kühlrippen des Radialgehäuses zum Motorgehäuse hin gerichtet und bevorzugt quer zur Motorachse angeordnet sind. Insbesondere bei Verwendung von hocheffektiven Permanentmagnetmotoren, wie sie für die vorliegende Erfindung bevorzugt eingesetzt werden, ist die vom Elektromotor erzeugte Abwärme typischerweise geringer als die von der Leistungselektronik des Drehzahlstellers erzeugte. Es ist daher sinnvoll, das Radialgehäuse quer zu berippen, vorzugsweise derart, dass die Kühlrippen am Motorgehäuse fortgesetzt werden, sodass sich eine intensive Konvektionsströmung ergibt, wenn der Motor liegend und insbesondere wenn das Radialgehäuse an der Oberseite angeordnet sind. Dabei erstrecken sich die Kühlrippen des Radialgehäuses vorteilhaft in einem zwischen dem Boden des Grundkörpers des Radialgehäuses und dem Motorgehäuse gebildeten Freiraum, nutzen also den zwischen dem im Wesentlichen zylindrischen Motorgehäuse und dem Grundkörper gebildeten Freiraum gezielt aus, um dort eine besonders intensive Konvektionskühlung zu erzeugen.

Da Permanentmagnetmotoren kompakt bauen, kann es je nach Leistungsstufe erforderlich sein, dass eine Konvektionskühlung durch vorzugsweise quer zur Motorachse angeordnete Kühlrippen an der Unterseite des Grundkörpers des Radialgehäuses zur Kühlung der Leistungselektronik des Drehzahlstellers nicht ausreichen, dann kann gemäß einer vorteilhaften Weiterbildung der Erfindung das Radialgehäuse in axialer Richtung des Motors über den Grundkörper hinaus verlängert und in dem verlängerten Bereich als Kühlkörper ausgebildet sein. Auch bei dieser Anordnung wird ein ohnehin vorhandener Freiraum genutzt, um die erforderlichen Kühlflächen zur Konvektionskühlung am Radialgehäuse vorzusehen.

Vorteilhaft ist nicht nur das Grundgehäuse des Radialgehäuses, sondern auch das dieses tragende Motorgehäuse metallisch ausgebildet, wobei auch das Motorgehäuse mit radial und quer zur Motorachse angeordneten Kühlrippen versehen ist, die vorzugsweise fluchtend zu den Kühlrippen des Radialgehäuses angeordnet sind.

Zweckmäßigerweise ist innerhalb des Radialgehäuses eine die elektronischen Bauteile z. B. des Drehzahlstellers tragende Platine angeordnet, welche sich flächig durch das Radialgehäuse erstreckt, und zwar vorteilhaft bis in den das Axialgehäuse überragenden Teil des Radialgehäuses oder, wenn das Axialgehäuse in einer Ebene quer zur Motorachse an das Radialgehäuse anschließt, sich bis in das Axialgehäuse hinein erstreckt. Auf diese Weise kann trotz der Anordnung von zwei Einzelgehäusen eine gemeinsame große Platine eingesetzt werden, die in einem der Einzelgehäuse zumindest mit Bestückung so nicht unterbringbar wäre.

So ist gemäß einer Weiterbildung der Erfindung vorgesehen, die Platine im Bereich des Axialgehäuses mit einem oder mehreren elektronischen Bauteilen zu versehen, welche zum einen eine Baugröße aufweisen, die im Radialgehäuse nicht oder nur schwer unterbringbar wäre und zum anderen die günstigenfalls in einem kühleren Gehäuseteil untergebracht werden. Dieses Bauteil kann somit eine Bauhöhe senkrecht zur Platine aufweisen, die größer als die Höhe des zwischen Platine und Boden bzw. Platine und Deckel des Radialgehäuses gebildeten Raumes ist, in dem dieses Bauteil oder diese Bauteile durch die fluchtenden Ausnehmungen in den aneinander angrenzenden Wandungen in das andere Gehäuse hineinragt. Hierdurch werden also sowohl thermisch als auch räumlich Vorteile erzielt.

Wenn das Radialgehäuse, zumindest der Grundkörper aus einem metallischen Werkstoff besteht, kann vorteilhaft in diesem eine metallische Wandung eingeformt sein, welche sich vom Boden des Grundkörpers bis zur Platine erstreckt und so Teil einer elektromagnetischen Abschirmung bildet. Da diese Wandung vorteilhaft einstückig mit dem Grundkörper ausgebildet ist, ergibt sich eine metallische Abschirmung für die Bauteile auf der Platine, die von dieser Wandung umschlossen sind. Es ist also nicht erforderlich, hier ein gesondertes Abschirmbauteil vorzusehen.

Der erfindungsgemäße Elektromotor ist grundsätzlich als Trockenläufer für eine Vielzahl von Anwendungen verfügbar, besonders vorteilhaft wird er jedoch als Nasslaufmotor zum Antrieb einer Kreiselpumpe eingesetzt, bildet also Teil eines Kreiselpumpenaggregats.

Die Erfindung ist nachfolgend anhand von in den Zeichnungen dargestellten Ausführungsbeispielen näher erläutert. Es zeigen:
- Fig. 1: in vereinfachter perspektivischer und teilweise geschnittener Darstellung ein Pumpenaggregat,
- Fig. 2: das Anschlussgehäuse des Elektromotors des Pumpenaggregats gemäß Fig. 1 in Explosionsdarstellung,

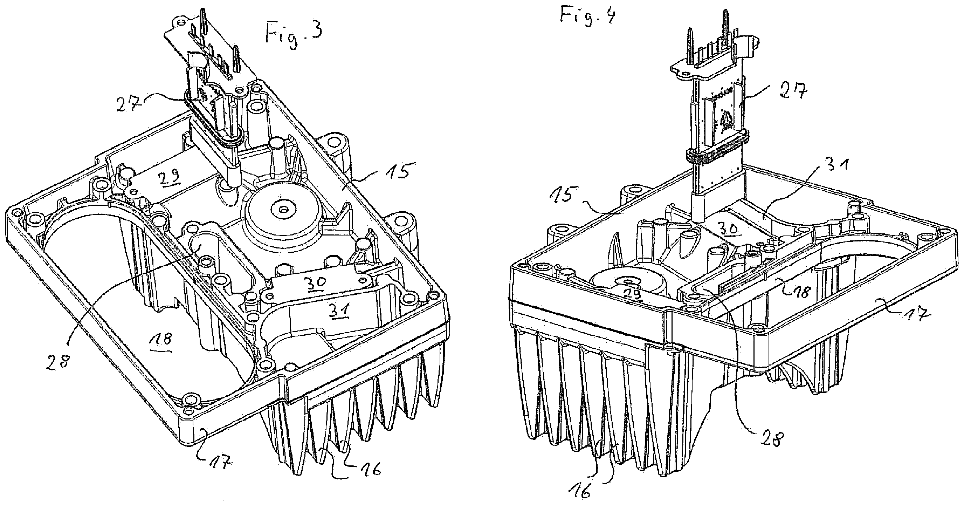

- Fig. 3: in perspektivischer Darstellung das Grundgehäuse des Radialgehäuses,
- Fig. 4: eine Darstellung aus anderer Perspektive gemäß Fig. 3,

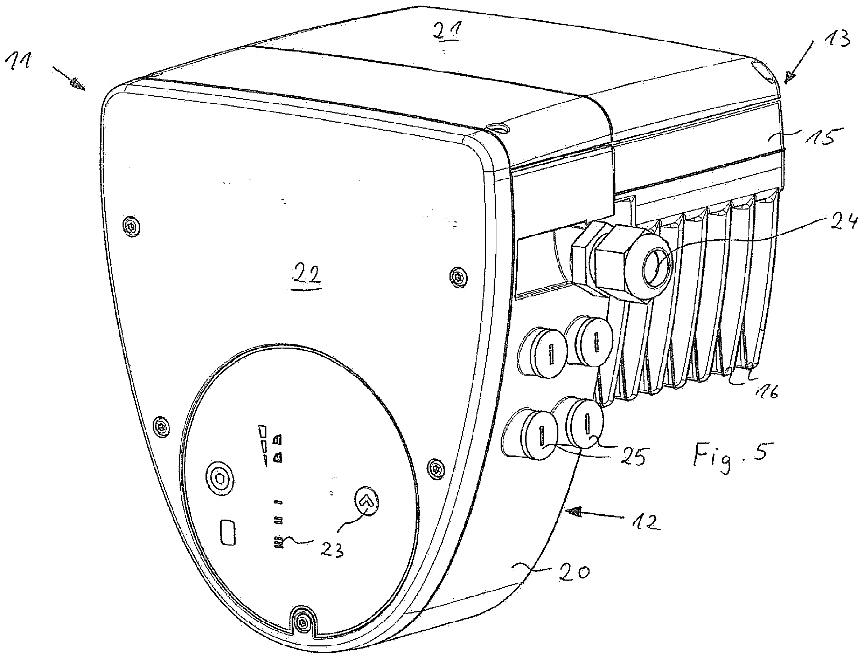

- Fig. 5: das Anschlussgehäuse nach Fig. 2 in montiertem Zustand, und
- Fig. 6: eine andere Anschlussgehäuseausführung in Explosionsdarstellung.

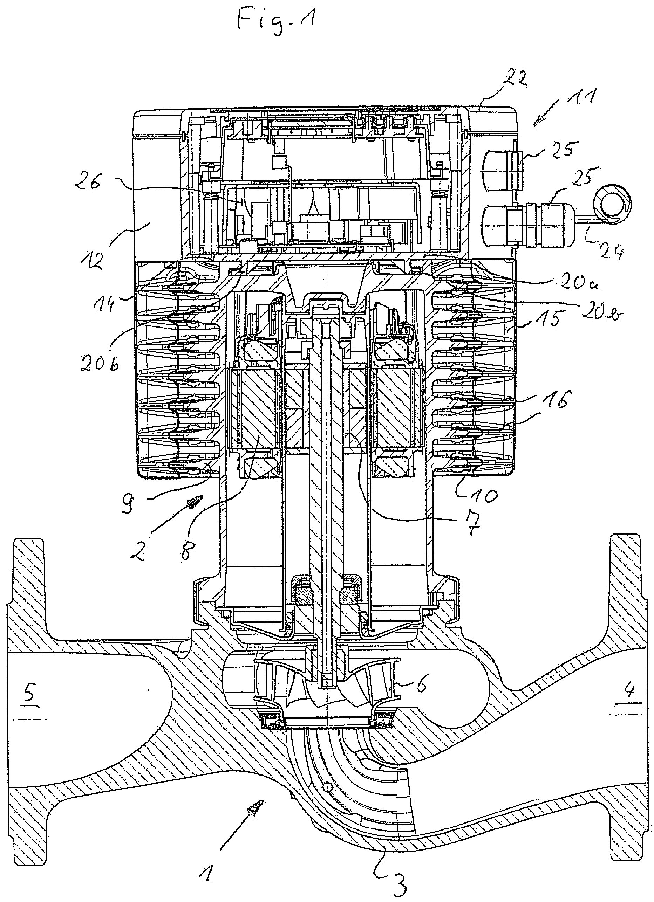

Das anhand von Fig. 1 dargestellte Pumpenaggregat weist eine Kreiselpumpe 1 auf, die von einem Elektromotor 2 angetrieben wird. Die Kreiselpumpe 1 weist ein Pumpengehäuse 3 auf, mit einem Ansaugstutzen 4 und einem Druckstutzen 5. Innerhalb des Pumpengehäuses 3 ist ein Kreiselrad 6 drehbar gelagert, welches drehfest mit einem sich in Achsrichtung daran anschließenden Rotor 7 eines Permanentmagnetmotors 2 verbunden ist, dessen Stator 8 von einem Motorgehäuse 9 umgeben ist. Innerhalb des Stators 8 ist der Rotor 7 drehbar angeordnet, der in einem Spaltrohrtopf sitzt und in Flüssigkeit läuft. Das Motorgehäuse 9 ist lösbar mit dem Pumpengehäuse 3 verbunden und hat eine im Wesentlichen zylindrische Form. Es ist aus Metall als Druckgussbauteil gebildet und weist mit Abstand zueinander radial verlaufende Kühlrippen 10 auf, die das Motorgehäuse 9 um etwas mehr als 180° des Umfangs umgeben.

An dem Motorgehäuse 9 ist ein Anschlussgehäuse 11 angebracht, welches aus zwei Einzelgehäusen, nämlich einem Axialgehäuse 12 und einem Radialgehäuse 13 gebildet ist. Das Axialgehäuse 12 schließt in Richtung der Drehachse des Motors gesehen axial an das Motorgehäuse 9, also an die freie und von der von dem Pumpengehäuse gegenüberliegend abgewandte Stirnseite 14 des Motorgehäuses 9 an. Das Radialgehäuse 13 erstreckt sich im Wesentlichen in radialer Richtung zur Motorachse, schließt sich also radial an das Motorgehäuse 9 an, und zwar in dem Bereich, in welchem das Motorgehäuse 9 nicht berippt ist.

Jedes der Einzelgehäuse 12 und 13 besteht aus einem Grundkörper und einem Deckel. Der Grundkörper 15 des Radialgehäuses 13 besteht aus einer Leichtmetalllegierung und ist als Druckgussbauteil ausgebildet. Der Grundkörper 15 ist wannenförmig ausgebildet und mit seinem Boden am Motorgehäuse 9 schraubbefestigt. Der Grundkörper 15 ist zum Motorgehäuse 9 hin berippt ausgebildet, wobei die Kühlrippen 16 ebenfalls quer zur Drehachse des Motors mit Abstand voneinander derart angeordnet sind, dass sie die Kühlrippen 10 des Motorgehäuses 9 fluchtend fortsetzen. Da der Grundkörper 15 der Rundung des Motorgehäuses 9 nur teilweise angepasst ist, ergibt sich in den Seitenbereichen ein größerer Abstand zwischen Grundkörper 15 und Motorgehäuse 9, der durch die Kühlrippen 16, die in diesem Bereich eine deutlich größere Höhe aufweisen, ausgefüllt ist. Der Grundkörper 15 weist eine Auskragung 17 auf, mit der sich dieser über das axiale Ende des Motorgehäuses 9 hinaus in den Bereich des Axialgehäuses 12 erstreckt. In diesem, das Axialgehäuse 12 überragenden Bereich weist der Grundkörper 15 eine sich nahezu über den gesamten auskragenden Bereich erstreckende langlochförmige Ausnehmung 18 im Boden auf, die zu einer dazu fluchtenden Ausnehmung 19 in einer Seitenwand eines Grundkörpers 20 des Axialgehäuses 12 angeordnet ist, welches an der vom Pumpengehäuse 3 gegenüberliegend abgewandten Stirnseite an das Motorgehäuse 9 anschließt. Dieses Axialgehäuse 12 setzt die Außenkontur von Motorgehäuse und Radialgehäuse 13 im Bereich des Motors in axialer Richtung fort und wird einseitig durch die Auskragung 17 des Radialgehäuses 13 abgeschlossen.

Der Grundkörper 15 des Radialgehäuses 13 wird durch einen Deckel 21 abgeschlossen, der als Kunststoffspritzgussteil ausgebildet ist und den wannenförmigen Grundkörper 15 einschließlich der Auskragung 17 nach außen hin dicht abschließt. Der Deckel 21 weist eine angeformte Dichtung auf und ist mittels Schrauben lösbar am Grundkörper 15 befestigt.

Auch der Grundkörper 20 des Axialgehäuses 12 weist einen Deckel 22 auf, der lösbar am ebenfalls im Wesentlichen wannenförmig ausgebildeten Grundkörper 20 schraubbefestigt ist und diesen über eine angeformte Dichtung dicht abschließt.

Sowohl der Deckel 22 als auch der Grundkörper 20 sind als Kunststoffspritzgussteile ausgebildet. Der Deckel 22 beinhaltet sämtliche Anzeige- und Bedienelemente 23 des gesamten Aggregats.

Das Axialgehäuse 12 beinhaltet die Motorsteuerung sowie sämtliche Leitungsdurchführungen in das Anschlussgehäuse 11. In dem dargestellten Ausführungsbeispiel sind eine zentrale Leitungsdurchführung 24 für eine Netzversorgungsleitung sowie darüber hinaus vier Leitungsdurchführungen 25 vorgesehen, die nur bedarfsweise beispielsweise für Steuerleitungen, Sensorleitungen oder dergleichen nutzbar sind, im Übrigen jedoch durch einen Stopfen dicht verschlossen werden. Innerhalb des Axialgehäuses 12 wird die zum Versorgungsnetz führende Leitung angeklemmt.

Axialgehäuse 12 und Radialgehäuse 13 sind über ihre Grundkörper 20 und 15 formschlüssig miteinander verbunden, und zwar im Bereich der Ausnehmungen 17 und 18. Das Axialgehäuse 12 weist im Bereich seiner Ausnehmung 19 federelastische Zungen auf, welche durch die Ausnehmung 18 im Boden des Radialgehäuses 13 hindurchgeführt und hinter der Ausnehmung 18 widerhakenähnlich zurückspringen, wodurch diese Gehäuse durch einfaches Zusammenstecken formschlüssig miteinander verbunden werden. Eine angeformte Dichtung in diesem Bereich sorgt für einen hermetischen Abschluss nach außen.

Die Grundkörper 15 und 20 werden also nach ihrer Bestückung durch einfaches Zusammenstecken miteinander verbunden, wonach das so zusammengefügte Anschlussgehäuse radial auf das Motorgehäuse 9 aufgesetzt und hierauf befestigt wird. Um auch das Axialgehäuse formschlüssig am Motorgehäuse 9 festzulegen, sind zwischen der Stirnseite des Motorgehäuses 9 und dem daran anschließenden Boden des Grundkörpers 20 hintergreifende Führungen vorgesehen, welche das Axialgehäuse 12 beim Aufsetzen auf das Motorgehäuse 9 formschlüssig fixieren. Diese Formschlussmittel bewirken, dass bei einer Krafteinwirkung auf das Axialgehäuse 12 die Formschlussverbindung mit dem Grundkörper 20 und der Ausnehmung 18 praktisch unbelastet bleibt, sondern die auf das Axialgehäuse 12 wirkenden äußeren Kräfte direkt durch das Motorgehäuse 9 aufgenommen werden.

Der Grundkörper 15 des Radialgehäuses 13 weist aufgrund seines aus einer Leichtmetalllegierung bestehenden Werkstoffes ein um mehr als eine Zehnerpotenz höhere Wärmeleitfähigkeit auf, als die übrigen Gehäuseteile des Anschlussgehäuses 11. Deshalb sind im Grundkörper 15 die Leistungsbauteile des Drehzahlstellers verbaut. Innerhalb des Radialgehäuses 13 ist eine Platine angeordnet, welche sich nahezu über die gesamte Länge und Breite des Gehäuses und die Auskragung 17 erstreckt.

In diese Platine 26 greift ein zentraler Stecker 27 ein, der durch eine zentrale Ausnehmung 28 im Boden des Grundkörpers 15 dichtend geführt ist und über eine dazu fluchtend im Motorgehäuse 9 vorgesehene Ausnehmung die Wicklungen des Motors kontaktiert.

In den seitlichen Bereichen des Radialgehäuses 13, also dort wo die Kühlrippen 16 ihre weiteste Erstreckung haben, sind Anschlussflächen 29 und 30 ausgebildet, die wärmeleitend mit dem auf der Platine angeordneten Leistungsbauteilen verbunden sind.

Weiterhin ist innerhalb des Grundkörpers 15 eine senkrechte Wandung 31 eingeformt, die in Einbaulage bis zur Platine 26 reicht und zusammen mit dem Boden und einer Seitenwandung des Grundkörpers 15 eine Umhausung für elektronische Bauteile bildet, welche durch diese Umhausung störstrahlfest gekapselt sind.

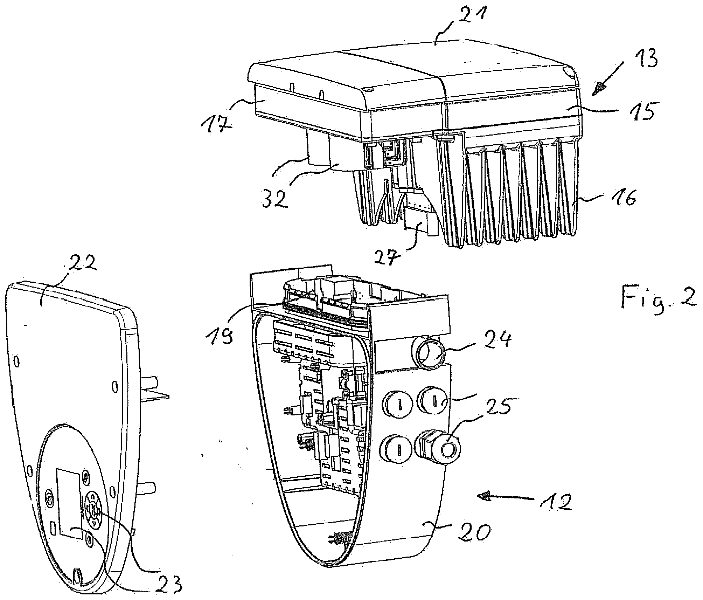

Während die wärmeerzeugenden Leistungsbauteile des Drehzahlstellers im Bereich des wannenförmigen Grundkörpers 15 angeordnet sind, sind die Bauteile, welche zum einen wegen ihrer Baugröße, insbesondere Bauhöhe in Einbaulage nicht in den zwischen Platine 26 und Grundkörper 15 gebildeten Freiraum passen würden, durch die Ausnehmung 18 hindurchgeführt, sodass diese in das Axialgehäuse 12 hineinragen. Es handelt sich hierbei auch um Bauteile, die vorteilhaft in einer kühleren Umgebung als die der Leistungselektronik anzuordnen sind. Deutlich sichtbar sind in Fig. 2 zwei Kondensatoren 32, welche im Bereich der Auskragung 17 auf der Platine 26 angeordnet sind, die Ausnehmungen 18 und 19 durchsetzen und bis in das Axialgehäuse 12 hineinragen. Das Innere des Axialgehäuses 12 ist zwar über die Ausnehmungen 18, 19 mit dem Gehäuseinneren des Radialgehäuses 13 verbunden, weist jedoch stets ein deutlich geringeres Temperaturniveau im Betrieb auf. Durch diese Ausnehmungen 18, 19 sind auch die elektrischen Verbindungen zwischen den Einzelgehäusen 12 und 13 geführt.

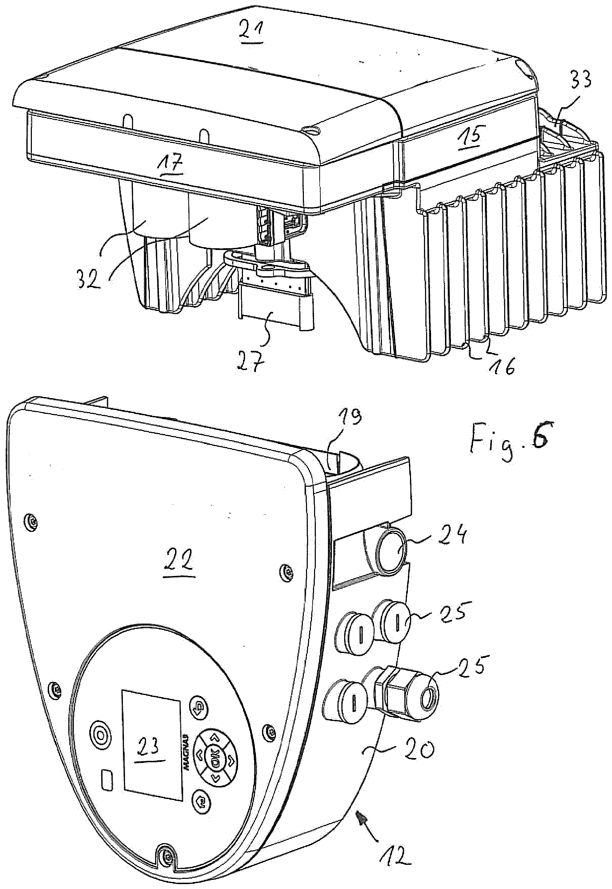

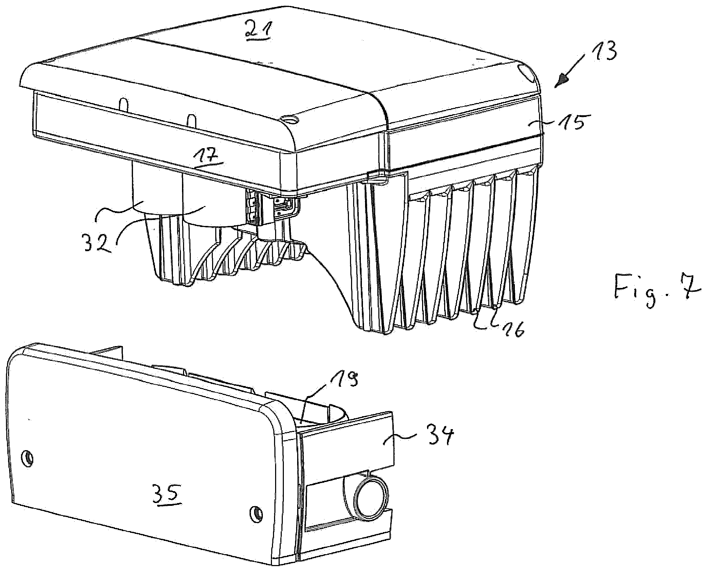

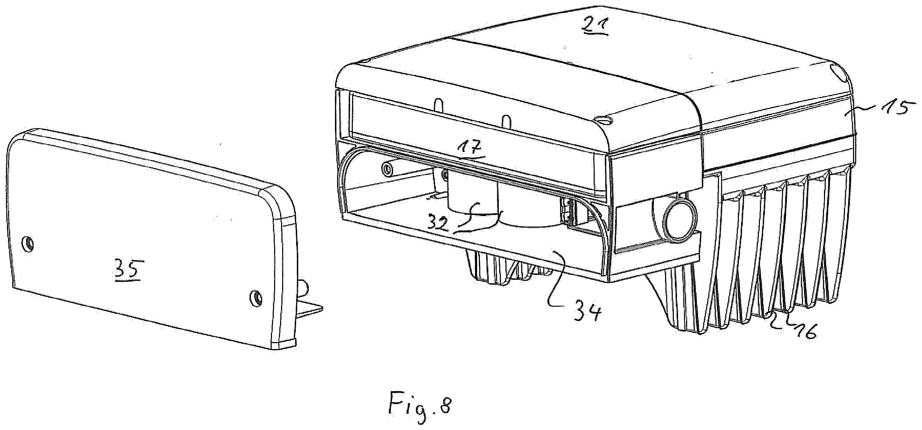

Bei der anhand von Fig. 6 dargestellten Ausführungsform, die sich nur hinsichtlich des Grundkörpers 15 von der Vorbeschriebenen unterscheidet, ist der Grundkörper 15 an seiner vom Axialgehäuse 12 gegenüberliegend abgewandten, also zum Pumpengehäuse 3 hin gerichteten Seite durch einen Kühlkörper 33 verlängert ausgebildet. Durch den angeformten Kühlkörper 33 kann bei sonst gleichen Gehäusebauteilen dieses Anschlussgehäuse für einen Elektromotor höherer Nennleistung eingesetzt werden, da der dann ebenfalls entsprechend größer dimensionierte und im Anschlussgehäuse unterzubringende Drehzahlsteller entsprechend intensiver gekühlt werden kann.

### Bezugszeichenliste

- 1: - Kreiselpumpe
- 2: - Elektromotor
- 3: - Pumpengehäuse
- 4: - Saugstutzen
- 5: - Druckstutzen
- 6: - Kreiselrad
- 7: - Rotor
- 8: - Stator
- 9: - Motorgehäuse
- 10: - Kühlrippen des Motors
- 11: - Anschlussgehäuse
- 12: - Axialgehäuse (Einzelgehäuse)
- 13: - Radialgehäuse (Einzelgehäuse)
- 14: - Stirnseite des Motorgehäuses 9
- 15: - Grundkörper des Radialgehäuses
- 16: - Kühlrippen des Radialgehäuses
- 17: - Auskragung des Radialgehäuses
- 18: - Ausnehmung im Boden des Grundkörpers 15
- 19: - Ausnehmung in der Seitenwand des Axialgehäuses 12
- 20: - Grundkörper des Axialgehäuses 12
- 21: - Deckel des Radialgehäuses
- 22: - Deckel des Axialgehäuses
- 23: - Anzeige- und Bedienelemente
- 24: - Leitungsdurchführung
- 25: - kleine Leitungsdurchführungen
- 26: - Platine des Radialgehäuses
- 27: - Stecker
- 28: - Ausnehmung für Stecker im Grundkörper 15
- 29: - Anschlussfläche
- 30: - Anschlussfläche
- 31: - Wandung
- 32: - Kondensatoren
- 33: - Kühlkörper in Fig. 6

## Patentansprüche

1. Elektromotor, insbesondere Spaltrohrmotor, mit einem außen am Motorgehäuse (9) angeordneten Anschlussgehäuse (11), welches elektrische Anschlüsse sowie elektronische Bauteile (32) aufnimmt und sich bezogen auf die Motorachse umfänglich und axial des Motorgehäuses (9) erstreckt, **dadurch gekennzeichnet,**
**dass** das Anschlussgehäuse (11) zwei miteinander verbundene Einzelgehäuse (12, 13) aufweist, deren Innenräume verbunden sind,
- **dass** ein Einzelgehäuse als Axialgehäuse (12) ausgebildet ist und in axialer Richtung an das Motorgehäuse (9) anschließt und das andere Einzelgehäuse als Radialgehäuse (13) ausgebildet ist und radial an das Motorgehäuse (9) anschließt,
- **dass** die Einzelgehäuse (12, 13) mehrteilig aufgebaut sind, wobei sich die Werkstoffe von mindestens zwei Bauteilen der Einzelgehäuse (12, 13) um mindestens eine Zehnerpotenz in der Wärmeleitfähigkeit unterscheiden,
- **dass** eine Anzeige- und/oder Bedieneinheit (23) vorgesehen ist, welche im Deckel (22) eines Einzelgehäuses (12) angeordnet ist, und
- **dass** das Radialgehäuse (13) einen metallischen und mit Kühlrippen (16) versehenen Grundkörper (15) aufweist, in dem eine Leistungselektronik aufweisende Platine (26) angeordnet ist, von der Leistungsbauteile wärmeleitend mit dem Grundkörper (15) verbunden sind, wobei die Leistungsbauteile in den bezogen auf die Längsachse des Motors (2) seitlichen Bereichen am Boden des Grundkörpers (15) angeordnet sind.

2. Elektromotor nach Anspruch 1, **dadurch gekennzeichnet, dass** nur ein Einzelgehäuse (12) eine oder mehrere Leitungsdurchführungen (24, 25) in die Außenumgebung aufweist.

3. Elektromotor nach einem der vorhergehenden Ansprüche, **dadurch gekennzeichnet, dass** die eine oder mehreren Leitungsdurchführungen (24, 25) in einer radialen Umfangswand des Axialgehäuses (12) angeordnet sind.

4. Elektromotor nach einem der vorhergehenden Ansprüche, **dadurch gekennzeichnet, dass** die Einzelgehäuse (12, 13) jeweils einen Grundkörper (15, 20) und einen Deckel (21, 22) aufweisen, wobei der Deckel (21, 22) auf der vom Motorgehäuse (9) gegenüberliegend abgewandten Seite des Grundkörpers (15, 20) angeordnet ist.

5. Elektromotor nach einem der vorhergehenden Ansprüche, **dadurch gekennzeichnet, dass** die Anzeige- und/oder Bedieneinheit (23) im Deckel (22) des Axialgehäuses (12) angeordnet ist.

6. Elektromotor nach einem der vorhergehenden Ansprüche, **dadurch gekennzeichnet, dass** das Anschlussgehäuse (11) einen elektronischen Drehzahlsteller für den Motor (2) aufnimmt und in einem Einzelgehäuse (13) der Leistungsteil des Drehzahlstellers und in dem anderen Einzelgehäuse (12) die Motorsteuerung angeordnet ist.

7. Elektromotor nach einem der vorhergehenden Ansprüche, **dadurch gekennzeichnet, dass** sich das Radialgehäuse (13) bis über das Axialgehäuse (12) erstreckt und die Einzelgehäuse (12, 13) in diesem Bereich miteinander verbunden sind.

8. Elektromotor nach einem der vorhergehenden Ansprüche, **dadurch gekennzeichnet, dass** in dem Bereich, in dem die Einzelgehäuse (12, 13) aneinander anschließen in den Wänden beider Gehäuse (12, 13) zueinander fluchtende Ausnehmungen (18, 19), diese umgebende Dichtmittel sowie Befestigungsmittel vorgesehen sind.

9. Elektromotor nach einem der vorhergehenden Ansprüche, **dadurch gekennzeichnet, dass** die Einzelgehäuse (12, 13) formschlüssig miteinander verbunden sind, vorzugsweise durch eine oder mehrere Klick- und/oder Rastverbindungen.

10. Elektromotor nach einem der vorhergehenden Ansprüche, **dadurch gekennzeichnet, dass** das Radialgehäuse (13) am Motorgehäuse (9) vorzugsweise schraubbefestigt ist und dass Führungsmittel zwischen dem Motorgehäuse (9) und dem Axialgehäuse (12) vorgesehen sind, welche das Axialgehäuse (12) formschlüssig am Motorgehäuse (9) halten.

11. Elektromotor nach einem der vorhergehenden Ansprüche, **dadurch gekennzeichnet, dass** Kühlrippen (16) des Radialgehäuses (13) zum Motorgehäuse (9) hin gerichtet und quer zur Motorachse angeordnet sind.

12. Elektromotor nach einem der vorhergehenden Ansprüche, **dadurch gekennzeichnet, dass** sich Kühlrippen (16) des Radialgehäuses (13) in einem zwischen dem Boden des Grundkörpers (15) des Radialgehäuses (13) und dem Motorgehäuse (9) gebildeten Freiraum erstrecken.

13. Elektromoto nach einem der vorhergehenden Ansprüche, **dadurch gekennzeichnet, dass** das Radialgehäuse (13) in axialer Richtung des Motors (2) über den Grundkörper (15) hinaus verlängert und in dem verlängerten Bereich als Kühlkörper (33) ausgebildet ist.

14. Elektromotor nach einem der vorhergehenden Ansprüche, **dadurch gekennzeichnet, dass** das Motorgehäuse (9) metallisch ausgebildet ist und radial und quer zur Motorachse angeordnete Kühlrippen (10) aufweist, die vorzugsweise fluchtend zu den Kühlrippen (16) des Radialgehäuses (13) angeordnet sind.

15. Elektromotor nach einem der vorhergehenden Ansprüche, **dadurch gekennzeichnet, dass** innerhalb des Radialgehäuses (13) eine metallische Wandung (31) vorgesehen ist, welche sich vom Boden des Grundkörpers (15) bis zur Platine (26) erstreckt und Teil einer elektromagnetischen Abschirmung bildet.

16. Elektromotor nach einem der vorhergehenden Ansprüche, **dadurch gekennzeichnet, dass** sich die Radialgehäuse (13) angeordnete Platine (26) bis in das Axialgehäuse oder in den das Axialgehäuse (12) überragenden Teil (17) des Radialgehäuses (12) hinein erstreckt.

17. Elektromotor nach einem der vorhergehenden Ansprüche, **dadurch gekennzeichnet, dass** die Platine (26) im Bereich des Axialgehäuses (12) mindestens ein elektronisches Bauteil (32) aufweist, dessen Bauhöhe senkrecht zur Platine (26) größer als die Höhe des zwischen Platine (26) und Boden des Radialgehäuses (13) gebildeten Raums ist.

## Claims

1. An electric motor, in particular canned motor, with a connection housing (11) which is arranged outside on the motor housing (9), receives electrical connections as well as electronic components (32) and with respect to the motor axis extends peripherally and axially of the motor housing (9), **characterised in that** the connection housing (11) comprises two individual housings (12, 13) which are connected to one another and whose interiors are connected,
- that an individual housing is designed as an axial housing (12) and connects to the motor housing (9) in the axial direction and the other individual housing is designed as a radial housing (13) and connects radially onto the motor housing (9),
- that the individual housings (12, 13) are constructed in a multipart manner, wherein the materials of at least two components of the individual housings (12, 13) differ in thermal conductivity by at least a power of ten,
- that a display and/or operating unit (23) is provided, which is arranged in the cover (22) of an individual housing (12),
- that the radial housing (13) comprises a metallic base body (15) which is provided with cooling ribs (16) and in which a circuit board (26) comprising power electronics is arranged, whose power components are connected to the base body (15) in a thermally conductive manner, wherein the power components are arranged in the regions on the base of the base body (15) which are lateral with respect to the longitudinal axis of the motor (2).

2. An electric motor according to claim 1, **characterised in that** only one individual housing (12) comprises one or more lead feed-throughs (24, 25) into the outer surroundings.

3. An electric motor according to one of the preceding claims, **characterised in that** the one or more lead feed-throughs (24, 25) are arranged in a radial peripheral wall of the axial housing (12).

4. An electric motor according to one of the preceding claims, **characterised in that** the individual housings (12, 13) each comprise a base body (15, 20) and a cover (21, 22), wherein the cover (21, 22) is arranged on the side of the base body (15, 20) which lies opposite and away from the motor housing (9).

5. An electric motor according to one of the preceding claims, **characterised in** the display and/or operating unit (23) is arranged in the cover (22) of the axial housing (12).

6. An electric motor according to one of the preceding claims, **characterised in that** the connection housing (11) receives an electronic speed controller for the motor (2), and the power part of the speed controller is arranged in one individual housing (13), and the motor control is arranged in the other individual housing (12).

7. An electric motor according to one of the preceding claims, **characterised in that** the radial housing (13) extends over the axial housing (12), and the individual housings (12, 13) are connected to one another in this region.

8. An electric motor according to one of the preceding claims, **characterised in that** recesses (18, 19) which are flush with one another, sealing means surrounding these, as well as fastening means are provided in the region, in which the individual housings (12, 13) connect on one another, in the walls of both housings (12, 13).

9. An electric motor according to one of the preceding claims, **characterised in that** the individual housings (12, 13) are connected to one another with a positive fit, preferably by way of one or more click connections and/or latch connections.

10. An electric motor according to one of the preceding claims, **characterised in that** the radial housing (13) is preferably screwfastened to the motor housing (9) and that guide means are provided between the motor housing (9) and the axial housing (12) and hold the axial housing (12) on the motor housing (9) with a positive fit.

11. An electric motor according to one of the preceding claims, **characterised in that** cooling ribs (16) of the radial housing (13) are directed towards the motor housing (9) and are arranged transversely to the motor axis.

12. An electric motor according to one of the preceding claims, **characterised in that** cooling ribs (16) of the radial housing (13) extend in a free space which is formed between the base of the base body (15) of the radial housing (13), and the motor housing (9).

13. An electric motor according to one of the preceding claims, **characterised in that** the radial housing (13) is extended beyond the base body (15) in the axial direction of the motor (2) and is designed as a cooling body (33) in the extended region.

14. An electric motor according to one of the preceding claims, **characterised in that** the motor housing (9) is designed in a metallic manner and comprises cooling ribs (10) which are arranged radially and transversely to the motor axis and which are preferably arranged aligned to the cooling ribs (16) of the radial housing (13).

15. An electric motor according to one of the preceding claims, **characterised in that** a metallic wall (31) is provided within the radial housing (13), said wall extending from the base of the base body (15) to the circuit board (26) and forming part of an electromagnetic shielding.

16. An electric motor according to one of the preceding claims, **characterised in that** the circuit board (26) arranged in the radial housing (13) extends to into the axial housing or into the part (17) of the radial housing (12) which projects beyond the axial housing (12).

17. An electric motor according to one of the preceding claims, **characterised in that** the circuit board (26) in the region of the axial housing (12) comprises at least one electronic component (32), whose construction height perpendicularly to the circuit board (26) is larger than the height of the space which is formed between the circuit board (26) and the base of the radial housing (13).

## Revendications

1. Moteur électrique, en particulier moteur à gaine, présentant, disposé à l'extérieur contre le carter de moteur (9), un carter de raccordement (11) qui présente des raccords électriques et des composants électroniques (32) et s'étend, par rapport à l'axe du moteur, sur la périphérie et axialement par rapport au carter de moteur (9), **caractérisé**
- **en ce que** le carter de raccordement (11) présente deux carters individuels (12, 13) reliés ensemble, dont les espaces intérieurs sont reliés,
- **en ce qu'**un carter individuel est exécuté en tant que carter axial (12) et se raccorde dans la direction axiale au carter de moteur (9) et en ce que l'autre carter individuel est exécuté en tant que carter radial (13) et se raccorde radialement au carter de moteur (9),
- **en ce que** les carters individuels (12, 13) sont formés de plusieurs pièces, les matériaux d'au moins deux composants des carters individuels (12, 13) se distinguant au moins d'une puissance de dix en conductibilité thermique,
- **en ce qu'**est prévue une unité d'affichage et/ou de commande (23) qui est disposée dans le couvercle (22) d'un carter individuel (12),
- **en ce que** le carter radial (13) présente un corps de base (15) métallique et muni de nervures de refroidissement (16), dans lequel est disposée une platine (26) présentant une électronique de puissance, dont des composants de puissance sont reliés par conduction de chaleur au corps de base (15), les composants de puissance étant disposés au fond du corps de base (15), dans les zones latérales par rapport à l'axe longitudinal du moteur (2).

2. Moteur électrique selon la revendication 1, **caractérisé en ce que** seul un carter individuel (12) présente un ou plusieurs passages de ligne (24, 25) vers l'environnement externe.

3. Moteur électrique selon l'une des revendications précédentes, **caractérisé en ce que** le ou les passages de lignes (24, 25) sont disposés dans une paroi périphérique radiale du carter axial (12).

4. Moteur électrique selon l'une des revendications précédentes, **caractérisé en ce que** les carters individuels (12, 13) présentent respectivement un corps de base (15, 20) et un couvercle (21, 22), le couvercle (21, 22) étant disposé sur le côté du corps de base (15, 20) opposé au carter de moteur (9).

5. Moteur électrique selon l'une des revendications précédentes, **caractérisé en ce que** l'unité d'affichage et/ou de commande (23) est disposée dans le couvercle (22) du carter axial (12).

6. Moteur électrique selon l'une des revendications précédentes, **caractérisé en ce que** le carter de raccordement (11) loge un régulateur de vitesse électronique pour le moteur (2), et **en ce que** sont disposés dans un carter individuel (13) la partie de puissance du régulateur de vitesse et dans l'autre carter individuel (12) la commande de moteur.

7. Moteur électrique selon l'une des revendications précédentes, **caractérisé en ce que** le carter radial (13) s'étend jusqu'au carter axial (12) et **en ce que** les carters individuels (12, 13) sont reliés ensemble dans cette zone.

8. Moteur électrique selon l'une des revendications précédentes, **caractérisé en ce que**, dans la zone dans laquelle les carters individuels (12, 13) se raccordent ensemble, sont prévus, dans les parois des deux carters (12, 13), des évidements (18, 19) alignés les uns sur les autres, des moyens d'étanchéité entourant ceux-ci et des moyens de fixation.

9. Moteur électrique selon l'une des revendications précédentes, **caractérisé en ce que** les carters individuels (12, 13) sont reliés ensemble par complémentarité de forme, de préférence par une ou plusieurs connexions par clippage ou verrouillage.

10. Moteur électrique selon l'une des revendications précédentes, **caractérisé en ce que** le carter radial (13) est fixé de préférence par vissage au carter de moteur (9) et **en ce que** des moyens de guidage sont prévus entre le carter de moteur (9) et le carter axial (12), qui retiennent le carter axial (12) au carter de moteur (9) par complémentarité de forme.

11. Moteur électrique selon l'une des revendications précédentes, **caractérisé en ce que** des nervures de refroidissement (16) du carter radial (13) sont orientées vers le carter de moteur (9) et disposées transversalement à l'axe du moteur.

12. Moteur électrique selon l'une des revendications précédentes, **caractérisé en ce que** des nervures de refroidissement (16) du carter radial (13) s'étendent dans un espace libre formé entre le fond du corps de base (15) du carter radial (13) et le carter de moteur (9).

13. Moteur électrique selon l'une des revendications précédentes, **caractérisé en ce que** le carter radial (13) se prolonge dans la direction axiale du moteur (2) au-delà du corps de base (15) et est exécuté dans la zone prolongée en tant que corps de refroidissement (33).

14. Moteur électrique selon l'une des revendications précédentes, **caractérisé en ce que** le carter de moteur (9) est exécuté en métal, et présente des nervures de refroidissement (10) disposées radialement et transversalement à l'axe du moteur, lesquelles sont disposées de préférence de façon alignée par rapport aux nervures de refroidissement du carter radial (13).

15. Moteur électrique selon l'une des revendications précédentes, **caractérisé en ce qu'**au sein du carter radial (13) est prévue une paroi métallique (31) qui s'étend depuis le fond du corps de base (15) jusqu'à la platine (26) et forme une partie d'un blindage électromagnétique.

16. Moteur électrique selon l'une des revendications précédentes, **caractérisé en ce que** la platine (26) disposée dans le carter radial (13) s'étend jusque dans le carter axial ou dans la partie (17) du carter radial qui surplombe le carter axial (12).

17. Moteur électrique selon l'une des revendications précédentes, **caractérisé en ce que** la platine (26) présente, dans la zone du carter axial (12), au moins un composant électronique (32) dont la hauteur perpendiculairement à la platine (26) est supérieure à la hauteur de l'espace formé entre la platine (26) et le fond du carter radial (13).
